# EUROPÄISCHE PATENTSCHRIFT

(11) **EP 2 958 752 B1**
(45) Veröffentlichungstag und Bekanntmachung des Hinweises auf die Patenterteilung: **07.10.2020**
(21) Anmeldenummer: 14708499.0
(22) Anmeldetag: 19.02.2014
(51) Int. Cl.: B41J 3/28, B41J 25/00

(54) **OBERFLÄCHENBEARBEITUNGSVORRICHTUNG**
SURFACE MACHINING DEVICE
DISPOSITIF DE TRAITEMENT DE SURFACE

(30) Priorität: 20.02.2013 DE 102013101693
(43) Veröffentlichungstag der Anmeldung: 30.12.2015
(73) Patentinhaber: Notion Systems GmbH, 68723 Schwetzingen (DE)
(72) Erfinder: SCHÖNEFELD, Jan, 69181 Leimen (DE); MÜNKEL, Jens, 68766 Hockenheim (DE); DORAN, Michael, 69221 Dossenheim (DE); SCHIMANSKY, Carsten, 74889 Sinsheim (DE)
(74) Vertreter: Kalkoff & Partner Patentanwälte PartmbB
(86) Internationale Anmeldenummer: PCT/EP2014/053247
(87) Internationale Veröffentlichungsnummer: WO 2014/128170

(56) Entgegenhaltungen:
- EP-A1- 1 839 884
- US-A1- 2006 092 219
- US-A1- 2011 199 409
- US-A1- 2011 235 065
- US-B2- 7 738 261

## Beschreibung

Die Erfindung betrifft eine Oberflächenbearbeitungsvorrichtung mit einem Substratträger zur Aufnahme eines zu bearbeitenden Substrats, einer gegenüber dem Substratträger entlang einer ersten und einer zweiten Bewegungsachse verstellbaren Bearbeitungseinheit, einer Lageerfassungseinheit zur Ermittlung der Ausrichtung des Substrats und einer Steuerungseinheit zur Bewegungssteuerung der Bearbeitungseinheit in Abhängigkeit von der Ausrichtung des Substrats auf dem Substratträger.

Oberflächenbearbeitungsvorrichtungen der eingangs genannten Art sind in vielfältigen Ausgestaltungen aus dem Stand der Technik, beispielsweise aus der US 2006/092219 A1, bekannt. Sie dienen dazu, die Oberfläche eines oder mehrerer auf einem Substratträger angeordneter Substrate in einer zuvor definierten Weise, durch eine hierfür vorgesehene Bearbeitungseinheit zu bearbeiten. Die Art der Oberflächenbearbeitung hängt dabei von der Ausgestaltung der Bearbeitungseinheit ab, die grundsätzlich in beliebiger Weise ausgestaltet sein kann. So kann durch die Bearbeitungseinheit bspw. ein Stoff auf die Oberfläche des Substrats aufgebracht werden, wobei hierzu bspw. Druck- insbesondere Inkjetdruck-Verfahren zur Anwendung kommen. Auch besteht die Möglichkeit, die Oberfläche des Substrats durch Materialabtrag, bspw. durch eine Lasereinheit, in vorbestimmter Weise zu verändern. Eine Laser-Bearbeitung kann auch in Form einer Laser-Belichtung erfolgen.

Neben den unterschiedlichen, durch die Ausgestaltung der Bearbeitungseinheit bestehenden Bearbeitungsmöglichkeiten der Oberfläche des Substrats, können auch die zu bearbeitenden Substrate unterschiedlicher Natur sein. Üblicherweise handelt es sich bei den zu bearbeitenden flächigen Substraten um solche technischer Art, wie bspw. Leiterplatten, Solarzellen, OLEDS oder elektronischen Displays, welche auch flexibel ausgebildet sein können. Als Substrate kommen jedoch auch Baustoffe wie bspw. Fliesen, Glasplattenfliesen, Holzlaminate oder dergleichen in Frage. Darüber hinaus können neben den vorgenannten flächigen Substraten aber auch Substrate bearbeitet werden, die eine räumliche Gestalt aufweisen. Die Grenzen der Bearbeitung räumlicher Substrate werden dabei lediglich durch den konstruktiv vorgegebenen Abstand der Bearbeitungseinheit von dem Substratträger bestimmt.

Insbesondere bei der Bedruckung von Substraten technischer Natur werden aufgrund der zunehmenden Bestrebungen der Miniaturisierung von Bauteilen bei gleichzeitiger Leistungssteigerung hohe Genauigkeiten an die Oberflächenbearbeitung gestellt, die in kostengünstiger Weise zu erfolgen hat. Um die geforderte hohe Qualität der Oberflächenbearbeitung zu erreichen, ist es bei dem aus den Stand der Technik bekannten Bearbeitungsvorrichtungen erforderlich, das zu bearbeitende Substrat in einer exakt vorbestimmten Weise auf dem Substratträger auszurichten. Dies ist jedoch nur mit einem hohen zeitlichen und/oder technischen Aufwand möglich und führt daher zu hohen Fertigungskosten, wobei überdies bereits geringe Lageabweichungen des Substrats zu erheblichen Qualitätseinbußen führen. Insbesondere im Falle der gleichzeitigen Bearbeitung mehrerer auf dem Substratträger angeordneter Substrate stellt deren Ausrichtung zueinander eine besondere Herausforderung dar.

Aus dem Stand der Technik bekannte Oberflächenbearbeitungsvorrichtungen sehen die Verlagerbarkeit des Substratträgers gegenüber der Bearbeitungseinheit vor, welche überdies selbst in beschränktem Maße eine Verstellbarkeit aufweisen kann, um die geforderte Oberflächenbearbeitung durchzuführen. Die Qualität der Bearbeitung erfüllt jedoch nicht immer die Anforderungen. Darüber hinaus weist die verlagerbare Anordnung des Substratträgers den Nachteil auf, dass aufgrund des hierfür zur Verfügung zu stellenden Bewegungsraums, die Vorrichtung insgesamt gegenüber stationären Substratträgern einen deutlich größeren Bauraum beansprucht.

Der Erfindung liegt die Aufgabe zugrunde, eine Oberflächenbearbeitungsvorrichtung bereitzustellen, welche sich kompakt herstellen lässt und in kostengünstiger Weise eine genaue Oberflächenbearbeitung der zu bearbeitenden Substrate unabhängig von der Lage der Substrate auf dem Substratträger ermöglicht.

Die Erfindung löst die Aufgabe durch eine Oberflächenbearbeitungsvorrichtung mit den Merkmalen des Anspruchs 1. Vorteilhafte Ausgestaltungen der Erfindung sind in den abhängigen Ansprüchen angegeben.

Die Oberflächenbearbeitungsvorrichtung weist neben mindestens einem Substratträger zur Aufnahme eines oder mehrerer zu bearbeitender Substrate eine gegenüber den oder dem Substratträgern entlang einer ersten und einer zweiten Bewegungsachse verstellbare Bearbeitungseinheit auf. Die Bewegungsachsen der Bearbeitungseinheit sind dabei im Wesentlichen orthogonal zueinander ausgerichtet, so dass die Bearbeitungseinheit durch eine grundsätzlich frei wählbare Kombination der Bewegungen entlang der ersten und zweiten Bewegungsachse in grundsätzlich jede Position gegenüber dem Substratträger und dem darauf angeordneten Substrat verstellt werden kann. Im Rahmen der Erfindung liegt eine "im Wesentlichen orthogonale" Ausrichtung der Bewegungsachsen neben deren bevorzugt rechtwinkliger Ausrichtung zueinander auch dann vor, wenn diese unter einem Winkel von 75°-105°, bevorzugt 80°-100°, besonders bevorzugt 85°-95° zueinander ausgerichtet sind. Die Bewegungssteuerung der Bearbeitungseinheit erfolgt dabei über eine Steuerungseinheit unter Berücksichtigung der zu erfolgenden Oberflächenbearbeitung sowie der durch eine Lageerfassungseinheit ermittelten Daten, wobei die Lageerfassungseinheit die Möglichkeit bietet, die Ausrichtung des Substrats auf dem Substratträger festzustellen. Durch eine Kombination der Steuerungsdaten, die durch die Oberflächenbearbeitung festgelegt sind sowie der Lagedaten ist es mittels der Steuerungseinheit möglich, die Bearbeitungseinheit derart gegenüber dem Substrat zu verstellen, dass die Oberflächenbearbeitung in vorgegebener Weise erfolgt. Die Lageerfassungseinheit kann dabei grundsätzlich in beliebiger Weise ausgebildet sein. Besonders vorteilhaft ist dabei der Einsatz von optischen Sensoren, bspw. Kameras, welche eine einfache und berührungslose Erfassung der Ausrichtung eines oder mehrerer Substrate auf dem Substratträger mit hoher Genauigkeit ermöglichen.

Unter Berücksichtigung der Lagedaten des oder der Substrate sowie der Steuerungsdaten, welche die Oberflächenbearbeitung beschreiben erfolgt die Bewegungssteuerung der Bearbeitungseinheit durch die Steuerungseinheit. Dabei erfolgt die Verlagerung der Bearbeitungseinheit entlang mindestens einer Bewegungsachse mittels eines ersten Gantry-Antriebs. Der Gantry-Antrieb, bei dem synchronisierte, motorische Antriebe zur Bewegung der Bearbeitungseinheit entlang einer Achse eingesetzt werden, erlaubt eine besonders platzsparende Bauweise sowie eine exakte Positionierung der Bearbeitungseinheit gegenüber dem Substratträger.

Die Ausgestaltung der Oberflächenbearbeitungsvorrichtung ermöglicht es, diese in besonders kompakter und bauraumsparender Weise auszugestalten, wobei die Oberflächenbearbeitung der zu bearbeitenden Substrate mit hoher Genauigkeit erfolgt. Über die Lageerfassungseinheit und die Kombination der durch diese ermittelten Daten mit den zur Oberflächenbearbeitung vorgesehenen Daten innerhalb der Steuerungseinheit, die ebenfalls grundsätzlich beliebig ausgebildet sein kann, kann auf eine exakte Ausrichtung der Substrate auf dem Substratträger verzichtet werden, was eine erhebliche Kosten- sowie Zeitersparnis gegenüber herkömmlichen Oberflächenbearbeitungsvorrichtungen bietet.

Die Ausgestaltung des Antriebs zur Verlagerung der Bearbeitungseinheit entlang der zweiten Bewegungsachse ist grundsätzlich frei wählbar. So ist es zur Verlagerung der Bearbeitungseinheit entlang der zweiten Bewegungsachse bspw. möglich, Riemenantriebe oder Mutter-Spindel-Mechanismen zu verwenden, um die Bearbeitungseinheit im Wesentlichen orthogonal zur ersten Bewegungsachse zu verstellen. Nach einer vorteilhaften Weiterbildung der Erfindung ist jedoch vorgesehen, dass die Bearbeitungseinheit entlang der zweiten Bewegungsachse mittels eines Linearantriebs, insbesondere Linearmotors verstellbar ist. Diese Ausgestaltung der Erfindung verbessert die Genauigkeit der Bewegungssteuerung der Bearbeitungseinheit in ergänzender Weise. Zudem lässt insbesondere die Verwendung eines Linearmotors die Ausgestaltung der Oberflächenbearbeitungsvorrichtung in einer besonders kompakten sowie wartungsarmen Weise zu. Gemäß einer Weiterbildung der Erfindung kann der Linearantrieb zur Verlagerung der Bearbeitungseinheit entlang der zweiten Bewegungsachse auch als zweiter Gantry-Antrieb ausgebildet sein, wobei dann die Bearbeitungseinheit an zwei synchronisierten Antrieben angeordnet ist, von denen jeweils einer an einer von zwei Linearführungen angeordnet ist, die parallel zur zweiten Bewegungsachse im Abstand voneinander verlaufen.

Die Verlagerbarkeit der Bearbeitungseinheit entlang der ersten und zweiten Bewegungsachse erlaubt es grundsätzlich, beliebige Oberflächenbereiche des Substrats in der gewünschten Weise mittels der Bearbeitungseinheit zu bearbeiten.

Dabei ist vorgesehen, dass die Bearbeitungseinheit relativ gegenüber dem Substratträger um eine sich senkrecht zu der durch die erste und zweite Bewegungsachse gebildeten Ebene erstreckende Hochachse verschwenkbar ist.

Dadurch besteht eine weitere Möglichkeit, die Bearbeitungseinheit, welche bspw. einen Druckkopf oder einen Bearbeitungslaser aufweisen kann, gegenüber dem Substrat und einem oder mehreren auf dem Substratträger angeordneten Substraten zu verstellen.

Zudem lässt sich eine um eine Hochachse, welche orthogonal zu der Ebene verläuft, die durch die erste und zweite Bewegungsachse gebildet ist, schwenkbare Bearbeitungseinheit in besonders einfacher und kostengünstiger Weise realisieren und erlaubt es in besonders einfacher Weise, die Bearbeitungseinheit an die Lage des Substrats auf dem Substratträger anzupassen. Es ist somit möglich, durch die Bearbeitungseinheit erzeugte Bearbeitungsspuren auf der Oberfläche des Substrats gleichbleibend und mit besonders hoher Qualität auszuführen, wobei insbesondere u. U. bei einer Bedruckung der Substratoberfläche andernfalls möglicherweise aufgrund der Lage des Substrats und der Art der Bedruckung auf dem Substratträger auftretende Rastersprünge vermieden werden können. Diese können dann entstehen, wenn das Substrat in einer Linie zu bedrucken ist, welche nicht parallel zu der ersten und/oder zweiten Bewegungsachse verläuft, was jedoch durch die durch die Steuereinheit steuerbare Verschwenkbarkeit ausgleichbar ist.

Erfindungsgemäß weist der Substratträger ein umlaufendes Förderband zur Aufnahme des Substrats auf, wobei das Förderband um die Hochachse schwenkbar ist. Diese Ausgestaltung der Erfindung erlaubt es in einfacher Weise, das Substrat gegenüber der Bearbeitungseinheit zu verstellen und in eine für die Bearbeitung optimale Position zu verlagern. Die Verwendung eines Förderbandes erlaubt es trotz der Verstellbarkeit des Substrats gegenüber der Bearbeitungseinheit die Oberflächenbearbeitungsvorrichtung insgesamt besonders platzsparend auszugestalten, nachdem auf einen zusätzlichen Bewegungsraum des Substratträgers verzichtet werden kann. Neben der Verschwenkbarkeit des Förderbandes um die Hochachse kann dieses auch neigbar ausgebildet sein.

Gemäß einer weiteren Ausgestaltung der Erfindung kann die Verschwenkbarkeit der Bearbeitungseinheit auch so ausgestaltet sein, dass die Bearbeitungseinheit Bereiche des Substrats bearbeitet, die nicht unmittelbar senkrecht unterhalb der Bearbeitungseinheit angeordnet sind. Eine derartige Verschwenkbarkeit, welche bspw. durch eine Verschwenkbarkeit um eine parallel zur ersten oder zweiten Bewegungsachse sowie parallel zu der durch dies gebildeten Ebene verlaufenden Schwenkachse erreicht wird, erlaubt es somit, den Bearbeitungsbereich der Bearbeitungseinheit auf solche Bereiche auszudehnen, welche nicht unmittelbar unterhalb der Bearbeitungseinheit angeordnet sind. Die Verschwenkbarkeit kann dabei grundsätzlich in beliebiger Weise ausgestaltet sein, wobei mittels einer beispielhafterweise vorgesehenen kugelkopfartigen Lagerung die Bearbeitungseinheit grundsätzlich in beliebiger Weise gegenüber dem Substratträger ausgerichtet werden kann.

Nach einer weiteren Ausgestaltung der Erfindung ist vorgesehen, dass die Bearbeitungseinheit an einem im Abstand zur zweiten Bewegungsachse verlaufenden Tragelement, insbesondere an einer parallel zur zweiten Bewegungsachse verlaufenden Linearführung abgestützt ist. Die durch diese Weiterbildung der Erfindung bewirkte ergänzende Abstützung der Bearbeitungseinheit ermöglicht es, die mechanische Stabilität der Bearbeitungseinheit in ergänzender Weise zu verbessern. Insbesondere bei Bearbeitungseinheiten mit einer hohen Breite kann durch die Verwendung eines Tragelements, insbesondere einer parallel zur zweiten Bewegungsachse verlaufende Linearführung, die durch die Bearbeitungseinheit aufgebrachte Last gleichmäßig verteilt werden. Hierdurch kann die Genauigkeit der Bearbeitungseinheit in ergänzender Weise gesteigert werden.

Nach einer weiteren Ausgestaltung der Erfindung ist vorgesehen, dass die Bearbeitungseinheit im Wesentlichen orthogonal zu der durch die erste und zweite Bewegungsachse gebildeten Ebene verstellbar ist. Gemäß dieser Ausgestaltung der Erfindung weist die Bearbeitungseinheit neben der erfindungsgemäß vorgesehenen Verlagerbarkeit in der durch die erste und zweite Bewegungsachse gebildeten Ebene ferner die Möglichkeit auf, in ihrem Abstand gegenüber dem Substratträger verstellt zu werden. Diese Ausgestaltung der Erfindung ermöglicht es, die Bearbeitungseinheit in eine für die Bearbeitung optimale Abstandsposition zu dem zu bearbeitenden Substrat zu verstellen. Ferner erlaubt diese Ausgestaltung der Erfindung eine besonders exakte Bearbeitung der Oberfläche räumlicher Substrate, wobei auch in diesem Fall die Bearbeitungseinheit immer in einem optimalen Abstand zur Oberfläche des zu bearbeitenden Substrates positioniert werden kann, auch dann wenn sich der Abstand der Oberfläche des Substrats von der Bearbeitungseinheit entsprechend dessen Form verändert. Die Verstellung der Bearbeitungseinheit in orthogonaler Richtung zu der durch die erste und zweite Bewegungsachse gebildeten Ebene kann dabei grundsätzlich in beliebiger Weise erfolgen und erlaubt es, die Bearbeitungseinheit in jeder Lage so zu positionieren, dass der Abstand zum Substrat angepasst wird.

Nach einer weiteren Ausgestaltung der Erfindung ist ferner vorgesehen, dass benachbart zum Substratträger sowie im Bewegungsbereich der Bearbeitungseinheit eine Wartungseinheit angeordnet ist. Eine derartige Weiterbildung der Erfindung ermöglicht es, die Bearbeitungseinheit im montierten Zustand bei Bedarf in eine Wartungsposition zu verbringen, bzw. in einer Wartungseinheit zu positionieren, wo die Bearbeitungseinheit selbsttätig gereinigt wird oder manuell gereinigt werden kann. Diese Ausgestaltung der Erfindung ermöglicht es, dass die Bearbeitungseinheit an der Oberflächenbearbeitungsvorrichtung verbleiben kann und in vorher festgelegten Intervallen oder im Falle einer festgestellten Verunreinigung selbsttätig in die Wartungseinheit verfahren werden kann.

Die erfindungsgemäße Ausgestaltung der Oberflächenbearbeitungsvorrichtung ermöglicht es, die auf dem Substratträger angeordneten Substrate in kostengünstiger Weise, in der vorgesehenen Art zu bearbeiten. Eine Verstellung des Substratträgers ist dabei zur Lösung der der Erfindung zugrunde liegenden Aufgabe nicht erforderlich. Nach einer vorteilhaften Weiterbildung der Erfindung ist jedoch vorgesehen, dass der Substratträger relativ gegenüber der Bearbeitungseinheit verstellbar ist. Die Verstellbarkeit des Substratträgers, wobei diese bspw. ebenfalls über die Steuereinheit erfolgen kann, erlaubt es in ergänzender Weise, die Oberflächenbearbeitung durch die Bearbeitungseinheit mit einer hohen Qualität, in kostengünstiger Weise durchzuführen. So kann über die Verlagerbarkeit des Substratträgers das oder die auf dem Substratträger angeordneten Substrate in optimaler Weise an die Ausgestaltung der Bearbeitungseinheit angepasst und gegenüber dieser ausgerichtet werden. Die vorgesehene Synchronisierung der Bewegung der Bearbeitungseinheit mit den Bewegungen des Substratträgers kann dabei über die Steuerungseinheit in optimaler Weise erfolgen.

Bei der Verwendung mehrerer Substratträger können diese grundsätzlich getrennt voneinander gesteuert werden. D. h., eine Synchronisierung der Substratträger untereinander ist ggf. nicht erforderlich, kann aber vorgenommen werden, wenn dies gefordert ist.

Die Verstellbarkeit des Substratträgers relativ gegenüber der Bearbeitungseinheit kann dabei grundsätzlich in beliebiger Weise realisiert werden. So kann bspw. auch eine gegenüber der durch die Bewegungsachsen gebildeten Ebene neigbare Ausgestaltung vorgesehen werden, was insbesondere eine optimale Oberflächenbearbeitung von solchen Oberflächen erlaubt, die - wie dies bei räumlichen Substraten der Fall sein kann - geneigt zu der Ebene verlaufen, die durch die erste und zweite Bewegungsachse gebildet ist. Nach einer besonders vorteilhaften Ausgestaltung der Erfindung ist jedoch vorgesehen, dass der Substratträger um die senkrecht zu der durch die erste und zweite Bewegungsachse gebildeten Ebene verlaufenden Hochachse schwenkbar ist. Diese Ausgestaltung erlaubt insbesondere bei flächigen Substraten einen einfachen Ausgleich einer Verdrehung des Substrats auf dem Substratträger, so dass die Oberflächenbearbeitung in optimaler Weise erfolgen kann.

Die Ausgestaltung des Substratträgers ist grundsätzlich frei wählbar. So kann dieser bspw. in seiner einfachsten Ausgestaltung durch eine ebene Platte aus Metall oder Kunststoff gebildet sein. Auch kann der Substratträger gemäß einer Weiterbildung der Erfindung zur Lagesicherung des Substrats auf dem Substratträger mit Haltemitteln versehen sein, die bspw. elektrostatisch oder über ein Vakuum wirken. Ferner ist es möglich, den Substratträger gemäß einer vorteilhaften Weiterbildung der Erfindung beheizbar auszugestalten, um so die zu bearbeitenden Substrate auf die für die Oberflächenbearbeitung optimale Bearbeitungstemperatur einzustellen.

Nach einer besonders vorteilhaften Ausgestaltung der Erfindung weist das Förderband eine parallel zur Bewegungsrichtung des ersten Gantry-Antriebs entsprechende Bewegungsrichtung auf. Weiter vorteilhaft kann das Förderband ebenfalls beheizbar und/oder zur Lagesicherung mit elektrostatisch und/oder über Vakuum wirkende Haltemittel versehen sein. Das Förderband selbst kann aus beliebigen Materialien gefertigt sein. Neben Kunststoffen kann das Förderband auch aus einem Metall, insbesondere einem Edelstahl gefertigt sein.

Die Bewegung des Förderbandes kann über die Steuerungseinheit mit der Bewegung des oder der Gantry-Antriebe synchronisiert werden, insbesondere derart, dass das Verhältnis der Geschwindigkeiten zumindest abschnittsweise hinreichend konstant ist, was bspw. durch gleiche Geschwindigkeiten erreicht wird. Besonders bevorzugt kann durch die Steuerungseinheit die synchrone Bewegung so gewählt werden, dass die Bearbeitungseinheit hinreichend parallel zu einer geraden Kante des Substrats geführt wird, was es erlaubt, entsprechend parallel verlaufende Linien ohne Rastersprünge auszuführen.

Die Ausgestaltung der Bearbeitungseinheit zur Oberflächenbearbeitung ist, wie bereits eingangs dargestellt, grundsätzlich frei wählbar. So kann die Bearbeitungseinheit bspw. mit einem Laser zur Oberflächenbearbeitung versehen sein. In besonders vorteilhafter Weise weist die Bearbeitungseinheit jedoch einen, vorzugsweise mehrere Inkjetdruckköpfe auf, die nach einer besonders vorteilhaften Ausgestaltung der Erfindung relativ zueinander verstellbar angeordnet sind. Die Verwendung einer oder mehrerer Inkjetdruckköpfe in Verbindung mit der erfindungsgemäßen Oberflächenbearbeitungsvorrichtung erlaubt eine kostengünstige und genaue, mittels eines Inkjetdrucks durchführbare Oberflächenbearbeitung. Über die Anzahl der eine oder mehrere Düsen aufweisenden Druckköpfe sowie über deren vorteilhafterweise vorgesehene Verstellbarkeit zueinander kann zudem ein besonders akkurates Druckergebnis erzielt werden.

Die Steuerungseinheit ist grundsätzlich zur Bewegungssteuerung der Bearbeitungseinheit verwendbar, wobei die Bewegung in Abhängigkeit von der Ausrichtung des Substrats auf dem Substratträger sowie unter Berücksichtigung der durchzuführenden Oberflächenbearbeitung erfolgt. Im Falle einer verlagerbaren Ausgestaltung des Substratträgers ist die Steuerungseinheit ferner nach einer weiteren Ausbildung der Erfindung auch zur Bewegungssteuerung des Substratträgers verwendbar, wobei die Steuerungseinheit, insbesondere die Bewegungen der Bearbeitungseinheit mit den Bewegungen des Substratträgers in Abhängigkeit von der vorgesehenen Oberflächenbearbeitung synchronisiert, so dass ein optimales Ergebnis der Oberflächenbearbeitung erzielt werden kann. Zudem kann auf separate Steuerungseinheiten verzichtet werden.

Ausführungsbeispiele der Erfindung werden nachstehend mit Bezug auf Zeichnungen näher erläutert. In den Zeichnungen zeigen:
- Fig. 1: eine schematische Darstellung einer ersten Oberflächenbearbeitungsvorrichtung mit einer nicht verschwenkbaren Bearbeitungseinheit;
- Fig. 2: eine schematische Darstellung einer zweiten, nicht erfindungsgemäßen Ausführungsform einer Oberflächenbearbeitungsvorrichtung;
- Fig. 3: eine schematische Darstellung der Ausführungsform der Oberflächenbearbeitungsvorrichtung von Fig. 2 mit einem skizzierten Verstellweg eines Drucckopfs;
- Fig. 4: eine schematische Darstellung der Ausführungsform der Oberflächenbearbeitungsvorrichtung von Fig.2 mit einer relativ gegenüber dem Substratträger um eine sich senkrecht zur durch die erste und zweite Bewegungsachse gebildeten Ebene erstreckenden Hochachse verschwenkbaren Bearbeitungseinheit;
- Fig. 5: eine schematische Darstellung einer dritten, ebenfalls nicht erfindungsgemäßen Ausführungsform einer Oberflächenbearbeitungsvorrichtung;
- Fig. 6: eine schematische Seitenansicht eine Ausführungsform der Oberflächenbearbeitungsvorrichtung von Fig. 1 mit integraler Wartungseinheit;
- Fig. 7: eine schematische Darstellung einer fünften, ebenfalls nicht erfindungsgemäßen Ausführungsform einer Oberflächenbearbeitungsvorrichtung;
- Fig. 8: eine schematische Darstellung einer sechsten, ebenfalls nicht erfindungsgemäßen Ausführungsform einer Oberflächenbearbeitungsvorrichtung und
- Fig. 9: eine schematische Darstellung einer siebten Ausführungsform einer Oberflächenbearbeitungsvorrichtung.

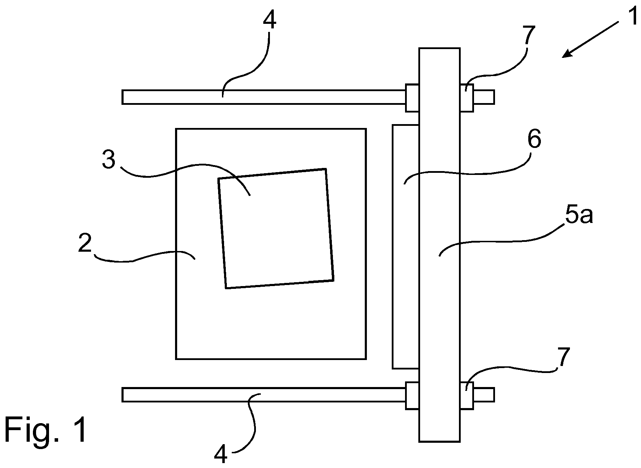

Unterschiedliche Ausführungsformen von Oberflächenbearbeitungsvorrichtungen 1 bis 1f sind in den Figuren 1 bis 9 in schematischer Weise dargestellt. Dabei ergibt sich aus den Darstellungen die Funktionsweise der jeweiligen Oberflächenbearbeitungsvorrichtungen 1 bis 1f.

In Fig. 1 ist eine erste Ausführungsform einer Oberflächenbearbeitungsvorrichtung 1 dargestellt, bei der eine Bearbeitungseinheit 6, die abweichend von der erfindungsgemäßen Ausführungsform nicht verschwenkbar dargestellt ist, über einen Gantry-Antrieb 5a entlang zweier Linearführungen 4 gegenüber einem Substratträger 2 in Längsachsenrichtung der Linearführungen 4 verstellbar ist. Zur Verlagerung der Bearbeitungseinheit 6 weist dabei der Gantry-Antrieb 5a zwei Vorschubmotoren 7 auf, welche eine lineare Verstellung der Bearbeitungseinheit 6 entlang der Linearführungen 4 in einer durch eine hier nicht dargestellte Steuerungseinheit vorgegebenen Weise ermöglichen.

Der Substratträger 2 dient zur Aufnahme eines auf diesem anzuordnenden flächigen Substrats 3, dessen Oberfläche mit der Bearbeitungseinheit 6 in einer vorgegebenen Weise bearbeitbar ist. Um die vorgegebene Bearbeitung unabhängig von der Ausrichtung des Substrats 3 auf dem Substratträger 2 durchzuführen, weist die Oberflächenbearbeitungsvorichtung 1 eine hier nicht dargestellte Lageerfassungseinheit auf, mittels derer die genaue Position sowie Ausrichtung (Verdrehung) des Substrats 3 auf dem Substratträger 2 ermittelt werden kann. Unter Berücksichtigung der durch die Lageerfassungseinheit ermittelten Lagedaten sowie der zu erfolgenden Oberflächenbearbeitung erfolgt durch die hier nicht dargestellte Steuerungseinheit eine Verstellung der Bearbeitungseinheit 6 gegenüber dem Substratträger 2, so dass das Substrat 3 nach der Bearbeitung die gewünschte Oberflächengestaltung aufweist.

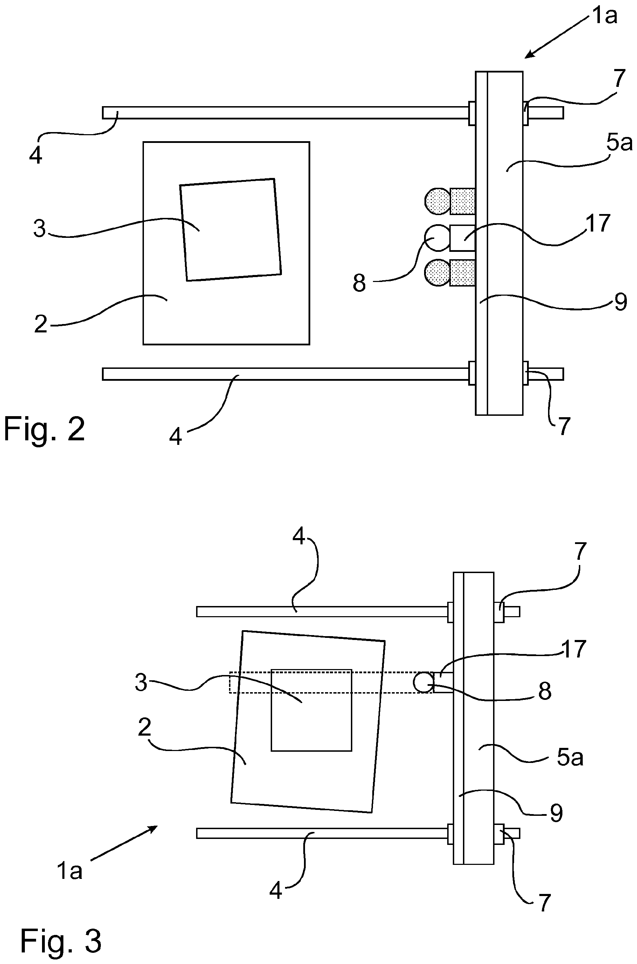

Die Ausgestaltung der Bearbeitungseinheit 6 ist grundsätzlich frei wählbar, wobei diese bspw. mit einem Laser oder Dispenser versehen sein kann oder aber einen Druckkopf 8 aufweist, wie dies bei der in den nicht erfindungsgemäßen Fig. 2 und 3 dargestellten Oberflächenbearbeitungsvorrichtung 1a der Fall ist. Der Inkjetdruckkopf 8 ist dabei über einen Lagerbock 17 mit dem Gantry-Antrieb 5a verbunden, wobei der Lagerbock 17 seinerseits an einer Linearführung 9 angeordnet ist und einen Linearantrieb in Form eines Vorschubmotors aufweist, welcher eine Verstellung des Druckkopfs 8 im Wesentlichen orthogonal zu der durch die Linearführungen 4 festgelegten ersten Bewegungsachse erlaubt. Unter Berücksichtigung der durch die Lageerfassungseinheit ermittelten Lagedaten des Substrats 3 auf dem Substratträger 2 kann somit durch die Steuerungseinheit eine Synchronisierung des Linearantrieb und des Gantry-Antriebs 5a erfolgen, so dass durch den Druckkopf 8 auf dem Substrat 3 die gewünschte Oberflächenbearbeitung durchgeführt wird. Die Ausgestaltung des Linearantriebs ist dabei grundsätzlich frei wählbar, wobei dieser auch als Gantry-Antrieb ausgestaltet sein kann.

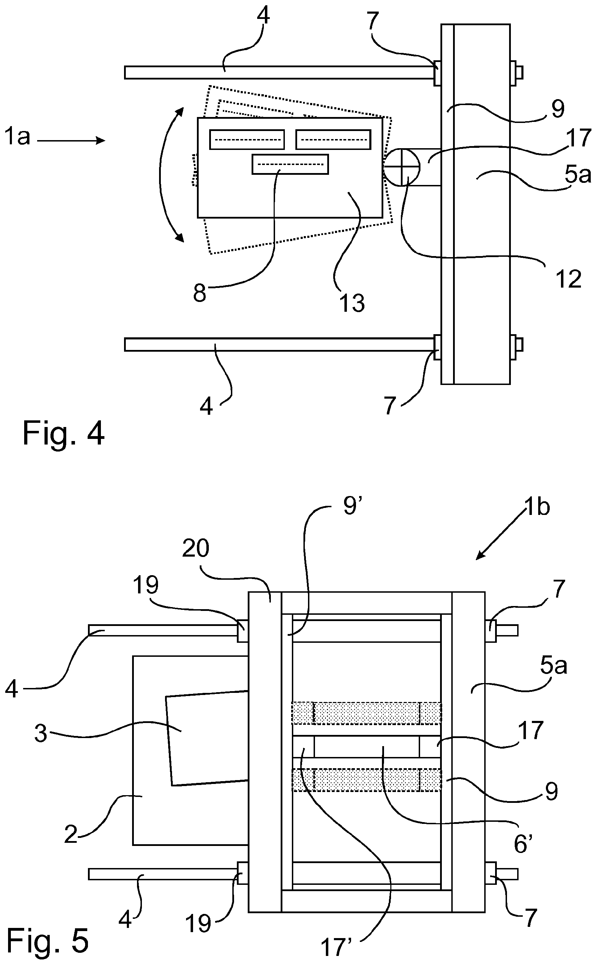

In der in Fig. 4 dargestellten Ausgestaltung der erfindungsgemäßen Oberflächenbearbeitungsvorrichtung 1c ist die Druckkopfaufnahme 13 mit drei Druckköpfen 8 versehen. Die Druckkopfaufnahme 13 ist über einen Schwenkantrieb 12 verschwenkbar. Der Schwenkantrieb 12 ist über den Lagerbock 17, der einen Vorschubmotor aufweist, mit der Linearführung 9 verbunden. Die Oberflächenbearbeitungsvorrichtung 1a erlaubt es, neben einer Verlagerung des Druckkopfs entsprechend dem Gantry-Antrieb 5a sowie dem Vorschubmotor an der Linearführung 9 ferner die Druckkopfaufnahme 13 und damit die Druckköpfe 8 um eine Hochachse zu verschwenken, die senkrecht zu einer durch die Bewegungsachsen gebildeten Ebene verläuft.

In einer weiteren, in Fig. 5 dargestellten nicht erfindungsgemäßen Ausgestaltung der Oberflächenbearbeitungsvorrichtung 1b ist parallel zum ersten Gantry-Antrieb 5a an einer sich zwischen den Linearführungen 4 erstreckenden Traverse 20 eine weitere Linearführung 9' angeordnet. An dieser Linearführung 9' ist ein Lagerbock 17' zur Aufnahme der Bearbeitungseinheit 6' verschiebbar gelagert, so dass einer breiten Bearbeitungseinheit 6' eine höhere mechanische Stabilität verliehen wird. Die auftretenden Lasten können gleichmäßig über die den Gantry-Antrieb 5a und die Traverse 20 tragende Linearführungen 4 verteilt werden. Eine Verschiebung der Bearbeitungseinheit 6' in Längsachsenrichtung der Linearführungen 9, 9' erfolgt über einen Vorschubmotor, welcher mit dem Lagerbock 17 der Linearführung 9 verbunden ist. Die Bearbeitungseinheit 6' ist überdies zwischen den Lagerböcken 17, 17' in der Höhe verstellbar, so dass der Abstand zum Substrat eingestellt werden kann. Die Traverse 20 und der Gantry-Antrieb 5a sind über auf den Linearführungen 4 angeordnete, sich durchgehend bis zu den Vorschubmotoren 7 erstreckende Führungselemente 19 in Längsachsenrichtung der Linearführungen 4 verstellbar.

In einer weiteren, hier nicht dargestellten Ausführungsform der Oberflächenbearbeitungsvorrichtung 1b ist am Lagerbock 17' ein weiterer Vorschubmotor angeordnet, der mit dem ersten Vorschubmotor an der Linearführung 9 einen zweiten Gantry-Antrieb bildet.

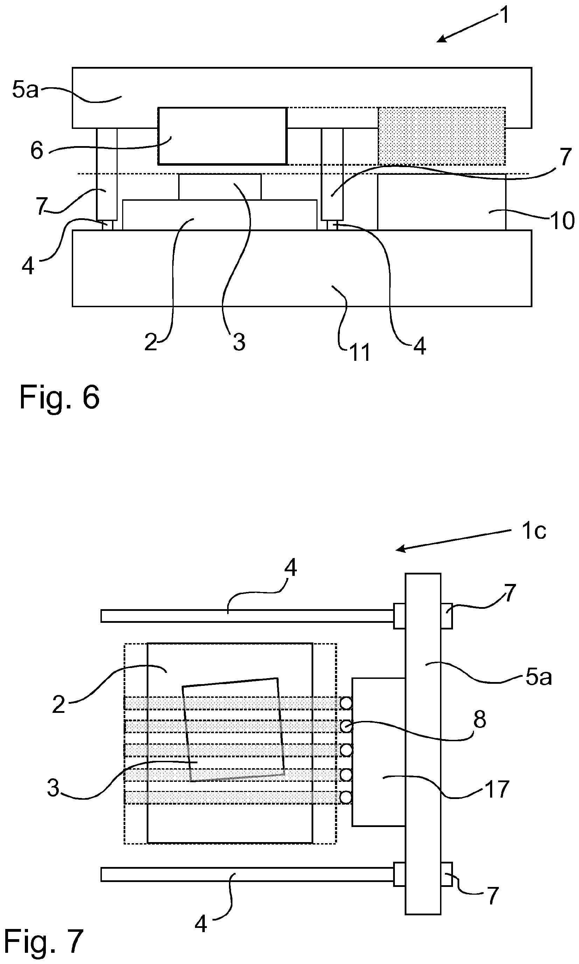

Neben der Verlagerbarkeit und Verschwenkbarkeit der Bearbeitungseinheit 6 gegenüber dem Substratträger 2, bzw. dem auf dem Substratträger 2 angeordneten Substrat 3 kann die Oberflächenbearbeitungsvorrichtung 1 ferner eine benachbart zum Substratträger 2 angeordnete Wartungseinheit 10 aufweisen, welche, wie auch der Substratträger 2, auf einer Maschinenbasis 11 angeordnet ist (vgl. Fig. 6).

Im Falle einer notwendigen Wartung der Bearbeitungseinheit 6 kann diese über die bestehende Verstellbarkeit aus ihrer Bearbeitungsposition in eine Position verlagert werden, in der die Bearbeitungseinheit 6 in die Wartungseinheit 10 geführt werden kann. Wartungen der Bearbeitungseinheit 6 können sowohl in festgelegten zeitlichen Intervallen oder aber bspw. nach einer sensorisch festgestellten Verschmutzung erfolgen.

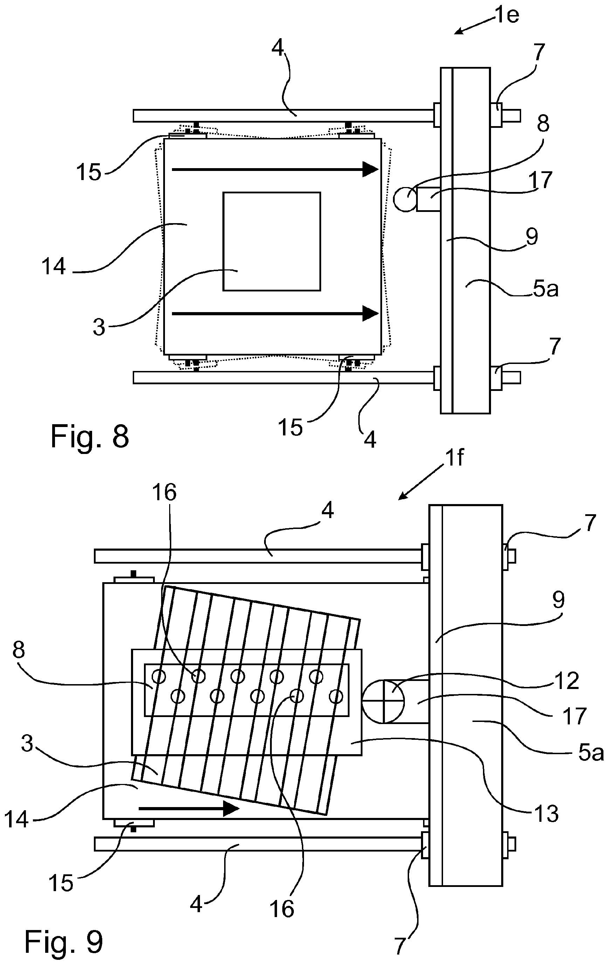

Bei der in Fig. 7 dargestellten nicht erfindungsgemäßen Ausgestaltung der Oberflächenbearbeitungsvorrichtung 1d besteht ferner die Möglichkeit, den Substratträger 2 und damit das darauf angeordnete Substrat 3 gegenüber den Druckköpfen 8 zu verstellen. Die Verstellbarkeit des Substratträgers 2 ist dabei bevorzugt, wie in einer ebenfalls nicht erfindungsgemäßen in Fig. 8 dargestellten Ausführungsform, durch ein Förderband 14 realisiert, das über zwei Laufrollen 15 eine Verstellbarkeit des auf dem Förderband 14 angeordneten Substrats 3 gegenüber dem Druckkopf 8 ermöglicht. Das Förderband 14 ist zudem gemeinsam mit den Laufrollen 15 um eine sich senkrecht zu der Oberfläche des Förderbands 14 erstreckenden Achse verschwenkbar, so dass das Substrat 3 in eine gegenüber dem Druckkopf 8 optimale Position verdreht werden kann.

Bei dem in Fig. 9 dargestellten Ausführungsbeispiel der Oberflächenbearbeitungsvorrichtung 1f ist das Förderband 14 ferner mit einer schwenkbaren Anordnung der Druckkopfaufnahme 13 kombiniert, wobei der dort verwendete Druckkopf 8 eine Vielzahl zueinander ausgerichteter Düsen 16 aufweist.

## Patentansprüche

1. Oberflächenbearbeitungsvorrichtung mit
- einem Substratträger (2) zur Aufnahme eines zu bearbeitenden Substrats (3),
- einer gegenüber dem Substratträger (2) entlang einer ersten und einer zweiten Bewegungsachse verstellbaren Bearbeitungseinheit (6, 6'), wobei die Bewegungsachsen bevorzugt rechtwinklig zueinander verlaufen oder unter einem Winkel von 75°-105°, bevorzugt von 80°-100°, besonders bevorzugt von 85°-95° zueinander ausgerichtet sind und die Bearbeitungseinheit (6, 6') mindestens entlang der ersten Bewegungsachse mittels eines ersten Gantry-Antriebs (5a) verstellbar ist,
- einer Lageerfassungseinheit zur Ermittlung der Ausrichtung des Substrats (3) auf dem Substratträger (2) und
- einer Steuerungseinheit zur Bewegungssteuerung der Bearbeitungseinheit (6, 6') in Abhängigkeit von der Ausrichtung des Substrats (3) auf dem Substratträger (2), wobei die Bearbeitungseinheit (6, 6') relativ gegenüber dem Substratträger (2) um eine sich senkrecht zur durch die erste und zweite Bewegungsachse gebildeten Ebene erstreckenden Hochachse verschwenkbar ist, der Substratträger (2) ein umlaufendes Förderband (14) zur Aufnahme des Substrats aufweist und das Förderband (14) um die Hochachse schwenkbar ist und zusätzlich auch neigbar ausgebildet sein kann.

2. Oberflächenbearbeitungsvorrichtung nach Anspruch 1, **dadurch gekennzeichnet, dass** die Bearbeitungseinheit (6, 6') entlang der zweiten Bewegungsachse mittels eines Linearantriebs, bevorzugt mittels eines Vorschubmotors besonders bevorzugt mittels eines zweiten Gantry-Antriebs verstellbar ist.

3. Oberflächenbearbeitungsvorrichtung nach einem der vorhergehenden Ansprüche, **dadurch gekennzeichnet, dass** die Bearbeitungseinheit (6, 6') an einem im Abstand zur zweiten Bewegungsachse verlaufenden Tragelement, insbesondere an einer parallel zur zweiten Bewegungsachse verlaufenden Linearführung (9') abgestützt ist.

4. Oberflächenbearbeitungsvorrichtung nach einem der vorhergehenden Ansprüche, **dadurch gekennzeichnet, dass** die Bearbeitungseinheit (6, 6') im Wesentlichen orthogonal zu der durch die erste und zweite Bewegungsachse gebildeten Ebene verstellbar ist.

5. Oberflächenbearbeitungsvorrichtung nach einem der vorhergehenden Ansprüche, **gekennzeichnet durch** eine benachbart zum Substratträger (2) sowie im Bewegungsbereich der Bearbeitungseinheit (6, 6') angeordneten Wartungseinheit.

6. Oberflächenbearbeitungsvorrichtung nach einem der vorhergehenden Ansprüche, **dadurch gekennzeichnet, dass** der Substratträger (2) relativ gegenüber der Bearbeitungseinheit (6, 6') verstellbar ist.

7. Oberflächenbearbeitungsvorrichtung nach einem der vorhergehenden Ansprüche, **dadurch gekennzeichnet, dass** der Substratträger (2) um die senkrecht zur durch die erste und zweite Bewegungsachse gebildeten Ebene verlaufenden Hochachse verschwenkbar ist.

8. Oberflächenbearbeitungsvorrichtung nach einem der vorhergehenden Ansprüche, **dadurch gekennzeichnet, dass** das Förderband (14) eine parallel zur Bewegungsrichtung des ersten Gantry-Antriebs (5a) entsprechende Bewegungsrichtung aufweist.

9. Oberflächenbearbeitungsvorrichtung nach einem der vorhergehenden Ansprüche, **dadurch gekennzeichnet, dass** die Bearbeitungseinheit (6, 6') einen Inkjetdruckkopf (8) aufweist.

10. Oberflächenbearbeitungsvorrichtung nach einem der vorhergehenden Ansprüche, **dadurch gekennzeichnet, dass** die Steuerungseinheit zur Bewegungssteuerung des Substratträgers (2) verwendbar ist, insbesondere die Bewegungen der Bearbeitungseinheit (6, 6') mit den Bewegungen des Substratträgers (2) in Abhängigkeit von der vorgesehenen Oberflächenbearbeitung synchronisiert.

## Claims

1. A surface machining device having:
- a substrate support (2) to receive a substrate to be machined (3),
- a machining unit (6, 6') adjustable relative to the substrate support (2) along a first and a second movement axis, wherein the movement axes preferably run at a right angle relative to each other or are oriented at an angle of 75°-105°, preferably 80°-100°, particularly preferably 85°-95° relative to each other, and the machining unit (6, 6') is adjustable at least along the first movement axis by means of a first gantry drive (5a),
- a position detecting unit for ascertaining the orientation of the substrate (3) on the substrate support (2), and
- a control unit for controlling the movement of the machining unit (6, 6') depending on the orientation of the substrate (3) on the substrate support (2),
wherein the machining unit (6, 6') can be pivoted relative to the substrate support (2) about a vertical axis extending perpendicular to the plane formed by the first and second movement axes, the substrate support (2) has a circulating conveyor belt (14) for receiving the substrate, and the conveyor belt (14) can swing about the vertical axis and can also be designed inclinable.

2. The surface machining device according to claim 1, **characterized in that** the machining unit (6, 6') is adjustable along the second movement axis by means of a linear drive, preferably by means of a feed motor, particularly preferably by means of a second gantry drive.

3. The surface machining device according to one of the preceding claims, **characterized in that** the machining unit (6, 6') is braced against a support element running at a distance to the second movement axis, in particular on a linear guide (9') running parallel to the second movement axis.

4. The surface machining device according to one of the preceding claims, **characterized in that** the machining unit (6, 6') is adjustable substantially orthogonally to the plane formed by the first and second movement axes.

5. The surface machining device according to one of the preceding claims, **characterized by** a service unit adjacent to the substrate support (2) and arranged within the range of the movement of the machining unit (6, 6').

6. The surface machining device according to one of the preceding claims, **characterized in that** the substrate support (2) is adjustable relative to the machining unit (6, 6').

7. The surface machining device according to one of the preceding claims, **characterized in that** the substrate support (2) is pivotable about the vertical axis running perpendicular to the plane formed by the first and second movement axes.

8. The surface machining device according to one of the preceding claims, **characterized in that** the conveyor belt (14) has a corresponding movement direction parallel to the movement direction of the first gantry drive (5a).

9. The surface machining device according to one of the preceding claims, **characterized in that** the machining unit (6, 6') has an inkjet print head (8).

10. The surface machining device according to one of the preceding claims, **characterized in that** the control unit can be used to control the movement of the substrate support (2), in particular synchronizes the movements of the machining unit (6, 6') with the movements of the substrate support (2) depending on the provided surface machining.

## Revendications

1. Dispositif de traitement de surface comprenant
- un support de substrat (2) destiné à recevoir un substrat (3) à traiter,
- une unité de traitement (6, 6') réglable le long d'un premier et d'un deuxième axe de déplacement par rapport au support de substrat (2), les axes de déplacement s'étendant de préférence en angle droit l'un par rapport à l'autre ou sont orientés de manière à former un angle de 75°-105°, de préférence de 80°-100°, de façon particulièrement préférentielle de 85°-95°, l'un par rapport à l'autre, et l'unité de traitement (6, 6') peut être réglée au moins le long du premier axe de déplacement à l'aide d'un premier entraînement Gantry (5a),
- une unité de détection de position destinée à détecter l'orientation du substrat (3) sur le support de substrat (2) et
- une unité de commande destinée à commander le déplacement de l'unité de traitement (6, 6') en fonction de l'orientation du substrat (3) sur le support de substrat (2),
dans lequel l'unité de traitement (6, 6') peut pivoter par rapport au support de substrat (2) selon un axe vertical s'étendant perpendiculairement au plan formé par les premier et deuxième axes de déplacement,
le support de substrat (2) présente une bande de transport à circulation continue (14) pour la réception du substrat et la bande de transport (14) peut pivoter autour de l'axe vertical tout en étant également conçue de façon inclinable.

2. Dispositif de traitement de surface selon la revendication 1, **caractérisé en ce que** l'unité de traitement (6, 6') peut être réglée le long du deuxième axe de déplacement à l'aide d'un entraînement linéaire, de préférence à l'aide d'un moteur d'avance, de façon particulièrement préférentielle à l'aide d'un deuxième entraînement Gantry.

3. Dispositif de traitement de surface selon l'une des revendications précédentes, **caractérisé en ce que** l'unité de traitement (6, 6') s'appuie sur un élément porteur s'étendant à distance du deuxième axe de déplacement, en particulier sur un guide linéaire (9') s'étendant parallèlement au deuxième axe de déplacement.

4. Dispositif de traitement de surface selon l'une des revendications précédentes, **caractérisé en ce que** l'unité de traitement (6, 6') est réglable essentiellement orthogonalement au plan formé par les premier et deuxième axes de déplacement.

5. Dispositif de traitement de surface selon l'une des revendications précédentes, **caractérisé par** une unité d'entretien disposée à côté du support de substrat (2) et dans la région de déplacement de l'unité de traitement (6, 6').

6. Dispositif de traitement de surface selon l'une des revendications précédentes, **caractérisé en ce que** le support de substrat (2) est réglable par rapport à l'unité de traitement (6, 6').

7. Dispositif de traitement de surface selon l'une des revendications précédentes, **caractérisé en ce que** le support de substrat (2) peut pivoter autour de l'axe vertical s'étendant perpendiculairement au plan formé par les premier et deuxième axes de déplacement.

8. Dispositif de traitement de surface selon l'une des revendications précédentes, **caractérisé en ce que** la bande de transport (14) présente une direction de déplacement correspondante parallèle à la direction de déplacement du premier entraînement Gantry (5a).

9. Dispositif de traitement de surface selon l'une des revendications précédentes, **caractérisé en ce que** l'unité de traitement (6, 6') présente une tête d'impression à jet d'encre (8).

10. Dispositif de traitement de surface selon l'une des revendications précédentes, **caractérisé en ce que** l'unité de commande peut être utilisée pour commander le déplacement du support de substrat (2), et synchronise en particulier les déplacements de l'unité de traitement (6, 6') avec les déplacements du support de substrat (2) en fonction du traitement de surface prévu.
